# EUROPÄISCHE PATENTSCHRIFT

(11) **EP 2 910 972 B1**
(45) Veröffentlichungstag und Bekanntmachung des Hinweises auf die Patenterteilung: **25.05.2016**
(21) Anmeldenummer: 15151418.9
(22) Anmeldetag: 16.01.2015
(51) Int. Cl.: G01S 17/10, G01S 7/486, G01S 7/497

(54) **Entfernungsmessender Sensor und Verfahren zur Abstandsbestimmung von Objekten in einem Überwachungsbereich**
Distance measuring sensor and method for determing the distance from objects in a monitoring zone
Capteur mesurant l'éloignement et procédé destiné à la détermination de distance d'objets dans une zone de surveillance

(30) Priorität: 20.02.2014 DE 102014102209
(43) Veröffentlichungstag der Anmeldung: 26.08.2015
(73) Patentinhaber: SICK AG, 79183 Waldkirch (DE)
(72) Erfinder: Marra, Martin, 79117 Freiburg (DE); Clemens, Klaus, 79367 Weisweil (DE); Daubmann, Michael, 79674 Todtnau (DE); Albert, Magnus, 79104 Freiburg (DE)
(74) Vertreter: Hehl, Ulrich

(56) Entgegenhaltungen:
- EP-A1- 1 936 400
- EP-A1- 2 182 377
- EP-A1- 2 182 379
- US-A- 5 359 404
- US-A1- 2012 261 516

## Beschreibung

Die Erfindung betrifft einen entfernungsmessenden Sensor und ein Verfahren zur Erfassung und Abstandsbestimmung von Objekten in einem Überwachungsbereich nach dem Oberbegriff von Anspruch 1 beziehungsweise 10.

Zahlreiche Sensoren nutzen ein Signallaufzeitprinzip, bei dem das Zeitintervall zwischen Senden und Empfang eines Signals über die Signallaufzeit in eine Entfernung umgerechnet wird. Dabei werden so verschiedene Frequenzbereiche des elektromagnetischen Spektrums wie Mikrowellen und Licht und auch andere physikalische Signale wie Ultraschall ausgenutzt. Bei optoelektronischen Sensoren nach dem Prinzip des Lichtlaufzeitverfahrens werden Lichtsignale ausgesandt, und die Zeit bis zum Empfang der an Objekten remittierten oder reflektierten Lichtsignalen wird gemessen. Aufgrund der konstanten Ausbreitungsgeschwindigkeit des Signals lässt sich die Signallaufzeit unmittelbar in eine Entfernung umrechnen.

Optoelektronische Entfernungsmessung kann beispielsweise in der Fahrzeugsicherheit, der Logistik- oder Fabrikautomatisierung oder der Sicherheitstechnik benötigt werden. Meist ist die gesuchte Ausgabegröße der gemessene Abstand. Alternativ kann ein Entfernungsmesser nach dem Lichtlaufzeitverfahren auch schaltend arbeiten, indem eine Entfernungsänderung eines in einem bestimmten Abstand erwarteten Reflektors oder eines reflektierenden oder remittierenden Objekts erkannt wird. Eine besondere Anwendung ist eine Reflexionslichtschranke mit Überwachung des Abstandes zu ihrem Reflektor. Das Lichtlaufzeitverfahren ist auch das Prinzip, nach dem entfernungsmessende Laserscanner arbeiten, die periodisch eine Überwachungsebene oder sogar einen dreidimensionalen Raumbereich abtasten. Fasst man mehrere Entfernungsdetektoren nebeneinander zusammen, so entsteht eine Lichtlaufzeitkamera, die dreidimensionale Bilddaten aufnimmt. Dabei können integrierte Bildsensoren gebildet werden, die in ihren Pixeln die Entfernungsmessung vornehmen.

Voraussetzung für eine genaue Signallaufzeitmessung ist die präzise Bestimmung des Empfangszeitpunkts. Dazu sind verschiedene Verfahren bekannt. Bei einem Phasenverfahren wird ein periodisch moduliertes Signal ausgesandt und die Phasenverschiebung zwischen ausgesandtem und empfangenem Signal bestimmt. Ein Pulsverfahren verwendet ein Signal, das eine genaue zeitliche Zuordnung zulässt. Die Erfassung erfolgt hier im einfachsten Fall durch Komparatorschwellen, bei aufwändigeren Verfahren wird das gesamte Empfangssignal abgetastet und digital ausgewertet, um den Empfangspuls zu lokalisieren. Ein Pulsmittelungsverfahren sendet eine Vielzahl von Sendepulsen und wertet die daraufhin empfangenen Pulse statistisch aus.

Unabhängig von der konkreten Auswertung wird zunächst das Lichtsignal in ein elektrisches Signal gewandelt und in einer analogen elektronischen Schaltung nachverstärkt. Da ein Photodetektor einen Photostrom erzeugt, wird als erste Verstärkerstufe ein Transimpedanzverstärker eingesetzt, so dass anschließend Spannungssignale zur Verfügung stehen.

Nun kann das zu erfassende Signalecho von Objekten mit sehr unterschiedlichen reflektierenden oder streuenden Eigenschaften und Helligkeiten und zudem aus kurzen Entfernungen von wenigen Zentimetern oder Distanzen von vielen Metern oder sogar Kilometern stammen. Das Signallaufzeitverfahren ist sehr universell und kann mit dieser Vielfalt an sich umgehen. Allerdings resultiert aus den unterschiedlichen Messbedingungen ein sehr großer Dynamikbereich, der beispielsweise bei Laserscannern bis zu 120 dB und mehr umfassen kann. Empfindliche optische Detektoren, wie PIN-Dioden oder Avalanche-Dioden (APD), sind zwar in der Lage, auch kleinste optische Signale zu erfassen, aber für die Elektronik stellt der Dynamikbereich eine sehr große Herausforderung dar. Das gilt gleichermaßen dafür, einer digitalen Signalauswertung ein digitales Signal ausreichender Qualität bereitzustellen, als auch für einfachere Schwellenverfahren, wo die Schwellen ebenfalls über den gesamten Dynamikbereich verteilt werden müssen, um die diversen Mess- und Störechos zu unterscheiden. Bei Verwendung eines statischen Verstärkungsfaktors spiegelt die Signaldynamik den quadratischen Abfall des optischen Signals im Fernfeld wieder und limitiert dadurch die Reichweite des Lichtlaufzeitverfahrens. Ein handelsüblicher Transimpedanzverstärker mit ausreichender Bandbreite deckt ungefähr einen linearen Verstärkungsbereich von 30-40 dB ab und bleibt damit weit hinter den gewünschten 120 dB zurück.

Im Stand der Technik sind verschiedene Ansätze bekannt, um mit dem großen Dynamikbereich umzugehen. Am einfachsten wäre die Verwendung nichtlinearer oder logarithmischer Verstärker, die aber für die geforderte Verarbeitung von Pulsen im Nanosekundenbereich mit ausreichender Bandbreite nicht zur Verfügung stehen. Eine andere Möglichkeit besteht darin, die Verstärkung dynamisch von Puls zu Puls anzupassen. In der EP 1 936 400 A1 wird dazu jeweils ein Vorpuls ausgesandt, um vor der eigentlichen Entfernungsmessung eine Information über die zu erwartende Empfangsstärke zu erhalten. Dazu müssen aber zumindest zwei Pulse in die gleiche Richtung ausgesandt werden, so dass sich die Reaktionszeit des Systems erheblich verschlechtert.

Die EP 2 182 379 A1 geht hier noch einen Schritt weiter und verwendet Informationen aus dem Messpuls selbst zur Anpassung des Verstärkungsfaktors, indem das Empfangssignal für die eigentliche Auswertung durch eine Verzögerungsleitung verlangsamt wird, damit die Verstärkung rechtzeitig angepasst werden kann. Hier stellt sich das Problem, jeweils den Verstärker angesichts der Kürze der Lichtpulse und der Messwiederholungen schnell und verzögerungsfrei einzustellen.

In der EP 2 182 377 A1 wird der Dynamikbereich auf mehrere Pfade mit komplementären Verstärkungsbereichen aufgeteilt. Aus den genannten Zahlen von 30-40 dB je Kanal und einem gewünschten Dynamikbereich von 120 dB ergibt sich, dass hierfür mindestens drei Kanäle erforderlich sind. Noch schwerer wiegt jedoch, dass sich die einzelnen Kanäle gegenseitig beeinflussen. Die Folgen sind erhöhtes Rauschen, erhöhte Störanfälligkeit und eine verminderte Detektionsfähigkeit.

Die US 5 359 404 offenbart eine laserbasierte Geschwindigkeitsmessvorrichtung, die eine Entfernungsmessung nach einem Pulslaufzeitverfahren ausführen kann. Eine Hochspannungsversorgung stellt die Leistung für das Aussenden der Laserpulse bereit und spannt den Lichtempfänger vor.

Es ist daher Aufgabe der Erfindung, die Entfernungsmessung über einen großen Dynamikbereich zu ermöglichen.

Diese Aufgabe wird durch einen entfernungsmessenden Sensor und ein Verfahren zur Erfassung und Abstandsbestimmung von Objekten in einem Überwachungsbereich nach Anspruch 1 beziehungsweise 10 gelöst. Dabei geht die Erfindung von dem Grundgedanken aus, zusätzliche Messinformationen unabhängig von dem eigentlichen Empfangssignal zu erschließen. Dafür wird ein Spannungseinbruch einer Vorspanneinheit des Empfängers gemessen und dieses Signal für eine Lichtlaufzeitmessung genutzt. Der Empfangszeitpunkt wird also gar nicht oder zumindest nicht ausschließlich aus dem eigentlichen Empfangssignal bestimmt, sondern indirekt aus dem Spannungseinbruch auf den Empfangszeitpunkt des remittierten Signals auf dem Empfänger geschlossen. Dabei muss bei einem Signallaufzeitverfahren der Empfangszeitpunkt nicht explizit bestimmt werden, da nur der relative Zeitabstand zu einem Sendezeitpunkt interessiert. Das Empfangssignal wird von dieser Auswertung des Spannungseinbruchs der Vorspanneinheit nicht beeinflusst und steht ohne Einschränkung für beliebige weitere analoge und digitale Auswertungsschritte zur Verfügung.

Die Erfindung hat den Vorteil, dass zu dem Empfangssignal außer dem verstärkten Empfangssignal selbst noch eine zusätzliche Messinformation verfügbar wird. Dies kann für eine Erweiterung des Dynamikbereichs genutzt werden.

Die Auswertungseinheit ist bevorzugt dafür ausgebildet, die Lichtlaufzeit mehrkanalig anhand des Empfangssignals und des Spannungseinbruchssignals zu bestimmen. Hierbei werden also Empfangssignal und Spannungseinbruchssignal als zwei Messkanäle aufgefasst. Das kann für eine redundante beziehungsweise diversitäre Messung genutzt werden, oder die Ergebnisse der beiden Messkanäle werden miteinander verglichen oder verrechnet. Besonders bevorzugt werden die Messkanäle genutzt, um jeweils unterschiedliche Signalstärken zu verarbeiten, so dass sich in Summe ein deutlich erweiterter Dynamikbereich ergibt, innerhalb dessen Empfangszeitpunkt und Amplitude des remittierten Signals präzise und zumindest weitgehend ohne Verstärkungsartefakte bestimmt werden können.

Zwischen Empfänger und Auswertungseinheit ist bevorzugt ein erster Verstärker vorgesehen, um aus dem Empfangssignal ein verstärktes Spannungssignal zu erzeugen. Insbesondere handelt es sich dabei um einen Transimpedanzverstärker, um aus einem Photostrom des Empfängers das weiter auszuwertende Spannungssignal zu erzeugen. Der erste Verstärker ist noch bevorzugter sehr empfindlich eingestellt, um schwache remittierte Signale zu detektieren. In diesem Fall werden komplementär die starken remittierten Signale über das Spannungseinbruchssignal detektiert.

Die Spannungsmesseinheit weist bevorzugt einen zweiten Verstärker auf. So wird auch das Spannungseinbruchssignal in einem einstellbaren bestimmten Teilbereich des abzudeckenden Dynamikbereichs zumindest weitgehend linear erfassbar.

Erster Verstärker und zweiter Verstärker weisen bevorzugt aufeinander abgestimmte Verstärkungsfaktoren auf, damit Empfangssignal und Spannungseinbruchssignal in unterschiedlichen Empfindlichkeitsbereichen erfasst werden. So ergänzen sich die beiden Messkanäle. Vorzugsweise wird das Spannungseinbruchssignal schwach oder gar nicht verstärkt, so dass der über den Spannungsabfall der Vorspanneinheit realisierte zusätzliche Messkanal für die Detektion starker remittierter Signale zuständig ist. Komplementär wird das eigentliche Empfangssignal mit hohem Verstärkungsfaktor verstärkt, so dass dieser Messkanal schwache remittierte Signale verarbeiten kann. Diese Aufteilung hat den Vorteil, dass wegen der unterschiedlichen Erfassungsprinzipien die über den Spannungseinbruch erfassten starken Signale die Auswertung der schwachen Signale nicht beeinträchtigen. Es sind aber auch andere Einstellungen der Verstärkungsfaktoren und damit andere Aufteilungen der Messkanäle denkbar, einschließlich einander ein wenig oder sogar großteils überlappender Bereiche für eine redundante Messwerterfassung.

Der Empfänger ist vorzugsweise eine Avalanche-Photodiode, und die Vorspanneinheit erzeugt eine Hochspannung. Die Avalanche-Photodiode eignet sich besonders für die optische Erfassung über einen großen Dynamikbereich bis hin zu sehr schwachen Signalen. Dazu wird eine Hochspannungsversorgung zum Vorspannen mit einigen hundert Volt oder mehr benötigt, deren Einbruch bei Detektion eines Signals als Spannungseinbruchssignal zuverlässig erfasst werden kann.

Die Vorspanneinheit weist bevorzugt einen Ladekondensator auf. Dadurch wird die Spannung und auch die Hochspannung der Vorspanneinheit nach einer Detektion, etwa einem Lawinendurchbruch einer Avalanche-Photodiode, wieder hergestellt.

Die Vorspanneinheit weist bevorzugt einen Widerstand zwischen Ladekondensator und Masse auf, wobei die Spannungsmesseinheit das Spannungseinbruchssignal an dem Widerstand erfasst. Auf diese Weise ist das abgegriffene Spannungseinbruchssignal proportional zum Strom des Empfängers, die Signalformen von Spannungseinbruchssignal und Empfangssignal entsprechen einander also ohne weitere Filtermaßnahmen.

Die Vorpanneinheit weist vorzugsweise einen Hochpassfilter auf. Dies dient dazu, niederfrequente Anteile des Spannungseinbruchssignals herauszufiltern, beispielsweise das vergleichsweise langsame Aufladen des Ladekondensators. Bei Wahl einer geeigneten Grenzfrequenz, die an die Signalform des Sendesignals angepasst ist, ergibt sich dann für das Spannungseinbruchssignal ein mit dem Empfangssignal vergleichbarer Signalverlauf, der die gemeinsame oder komplementäre Auswertung in den beiden Messkanälen vereinfacht.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine Blockdarstellung eines entfernungsmessenden Sensors;
- Fig. 2: eine Schaltskizze einer Ausführungsform der analogen Signalerfassung eines entfernungsmessenden Sensors;
- Fig. 3: ein beispielhafter zeitlicher Verlauf eines Empfangssignals eines Empfängers, eines dabei erfassten Spannungseinbruchssignals einer Vorspannung des Empfängers und des Spannungseinbruchssignals nach einer Hochpassfilterung; und
- Fig. 4: eine Schaltskizze einer weiteren Ausführungsform der analogen Signalerfassung eines entfernungsmessenden Sensors.

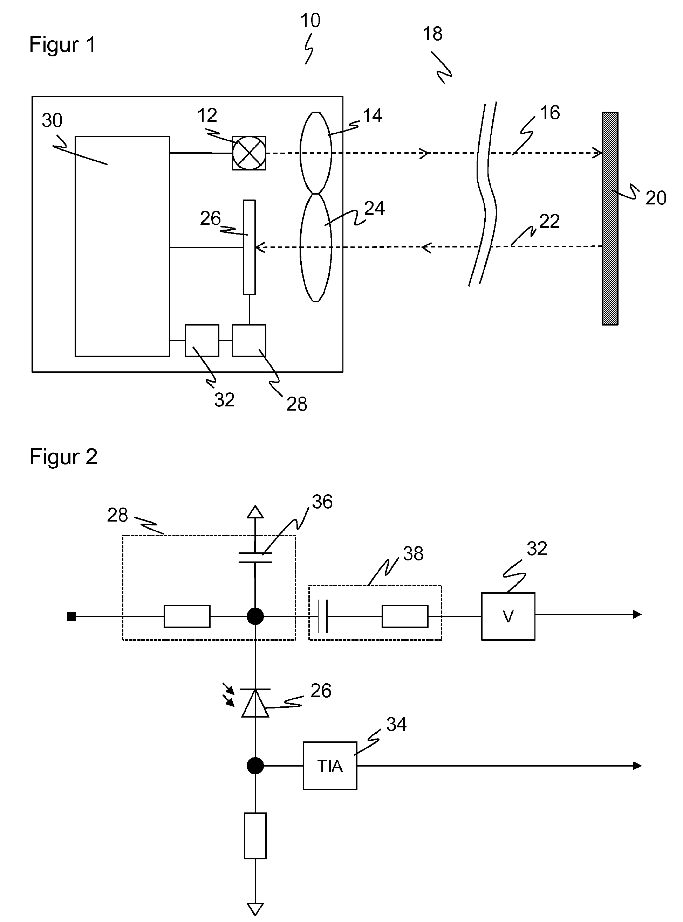

Figur 1 zeigt ein Blockschaltbild eines entfernungsmessenden Sensors 10 in einer Ausführungsform als eindimensionaler optoelektronischer Entfernungstaster. Ein Lichtsender 12 sendet über einer Sendeoptik 14 ein Lichtsignal 16 in einen Überwachungsbereich 18. Dort wird das Lichtsignal 16, wenn sich ein Objekt 20 im Strahlengang befindet, an diesem Objekt 20 reflektiert oder remittiert und kehrt als remittiertes Lichtsignal 22 zu dem Sensor 10 zurück. Dort wird es durch eine Empfangsoptik 24 auf einen Lichtempfänger 26 geführt.

Die optische Anordnung ist rein beispielhaft zu verstehen, die Erfindung umfasst ebenso andere Anordnungen, beispielsweise mit Teilerspiegeln oder einem Lichtsender im Kegel des Lichtempfängers. Auch die Erläuterung an einem eindimensionalen optoelektronischen Sensor ist nur exemplarisch zu verstehen, denn ebenso kann der Sensor ein mehrdimensionales System sein, wie ein Laserscanner oder eine Lichtlaufzeitkamera, oder mit gänzlich anderen Signalen wie Mikrowellen oder Ultraschall arbeiten.

Der Lichtempfänger 26 ist beispielsweise eine PIN-Diode oder eine AvalanchePhotodiode und mit Hilfe einer Vorspanneinheit 28 vorgespannt. Trifft ein remittiertes Lichtsignal 22 auf die photoempfindliche Fläche des Lichtempfängers 26, so wird ein entsprechender Photostrom erzeugt. Der Photostrom wird beispielsweise mit geeigneter Transimpedanzwandlung in ein Spannungssignal überführt und so einer Auswertungseinheit 30 zugeführt, die vorzugsweise zugleich für die Steuerungsaufgaben des Sensors 10 zuständig ist. Dabei kann es sich um eine analoge Schaltung handeln, meist wird aber das Empfangssignal noch digitalisiert und die Auswertungseinheit 30 auf einem digitalen Auswertungsbaustein implementiert, etwa einem Mikroprozessor oder einem FPGA (Field Programmable Gate Array).

Als Sendesignal wird ein kurzer Puls, allgemein zumindest ein Signal mit eindeutig identifizierbarem Zeitbezug ausgesandt. Dementsprechend haben auch die Echos von Objekten 20 oder Störern in dem Überwachungsbereich 18 diese Signalform. Die Auswertungseinheit 30 bestimmt den Empfangszeitpunkt aus dem Empfangssignal durch ein Schwellwertverfahren, durch eine Suche in dem digital vorliegenden Empfangssignal anhand der bekannten Sendesignalform oder ein sonstiges Verfahren. Denkbar ist auch, eine Vielzahl von Sendepulsen auszusenden, die daraufhin empfangenen Empfangspulse zu sammeln und so mit statistischen Mitteln einen Empfangszeitpunkt zu bestimmen. Das Ergebnis der Auswertung ist jeweils die Verzögerung des Empfangssignals gegenüber dem Sendesignal, also die Signallaufzeit. Mit Hilfe der bekannten Ausbreitungsgeschwindigkeit, hier also die Lichtgeschwindigkeit, in anderen Fällen beispielsweise auch die Schallgeschwindigkeit, kann die Signallaufzeit direkt in eine Entfernung des Objekts 20 umgerechnet werden.

Da die Sendepulse sehr kurz sind, oder alternativ zumindest Sendesignale mit steilen Flanken für die präzise Erfassung eines Empfangszeitpunkts verwendet werden, muss der Photostrom von einem Verstärker mit ausreichender Bandbreite verarbeitet werden, um die Signalform nicht zu verfälschen. Andererseits soll ein Amplitudenbereich in einer Größenordnung von 120 dB zudem noch bei möglichst geringem Rauschen erfassbar sein. Diese Anforderungen sind mit nur einem Verstärker nicht erfüllbar.

Die Erfindung weist deshalb eine Beschaltung auf, die den Einbruch der Photodioden-Hochspannung, allgemein einen Spannungseinbruch an der Vorspanneinheit 28, zur Detektion nutzt. Dazu ist eine Spannungsmesseinheit 32 mit der Vorspanneinheit 28 verbunden, die ein Spannungseinbruchssignal misst und an die Auswertungseinheit 30 übergibt. Dadurch wird ein alternativer, weitgehend unabhängiger Empfangskanal realisiert.

Das Spannungseinbruchssignal trägt im Prinzip die gleichen Informationen wie das Empfangssignal, so dass die Auswertungseinheit 30 daran die gleichen Auswertungen vornehmen kann, insbesondere eine Entfernungsmessung, aber auch eine Pegelbestimmung und dergleichen. Vorzugsweise bilden Spannungseinbruchssignal und Empfangssignal die Grundlage für zwei einander komplementär ergänzende Empfangsoder Messkanäle, so dass insgesamt ein größerer Dynamikbereich abgedeckt wird. Es ist aber prinzipiell auch denkbar, dass die Entfernungsmessung allein aufgrund des Spannungseinbruchssignals erfolgt. Das kann beispielsweise sinnvoll sein, wenn das Empfangssignal für eine ganz andere Messung benötigt wird und deshalb für eine Entfernungsmessung nicht zur Verfügung steht.

Im Übrigen ist auch denkbar, die durch das Empfangssignal beziehungsweise das Spannungseinbruchssignal gebildeten Messkanäle in sich noch einmal mehrkanalig auszubilden, beispielsweise um den insgesamt abzudeckenden Dynamikbereich in mehr als zwei Teilbereiche zu unterteilen, oder in diesen Messkanälen eine automatische Verstärkungsregelung vorzusehen.

Im Folgenden wird die Entstehung und Erfassung des Spannungseinbruchssignals anhand der Figuren 2 bis 4 näher erläutert. Figur 2 zeigt eine Schaltskizze einer Ausführungsform der analogen Signalerfassung des Sensors 10. Der Photostrom des Lichtempfängers 26 wird über einen Transimpedanzverstärker 34 und mögliche weitere, nicht dargestellte Verstärkerstufen als Empfangssignal zu der Auswertungseinheit 30 geleitet. Zur Erfassung des Photostroms ist der Lichtempfänger 26 mit Hilfe der Vorspanneinheit 28 und einem darin vorgesehenen Ladekondensator 36 vorgespannt. Die Erzeugung des Photostroms führt zu einem Einbruch der Spannung in der Vorspanneinheit 28. Dies wird von der Spannungsmesseinheit 32 als Spannungseinbruchssignal erfasst und entsprechend als zusätzliche oder alternative Messinformation der Auswertungseinheit 30 zugeführt. Vor die Spannungsmesseinheit 32 ist noch ein Hochpassfilter 38 geschaltet, um die niederfrequenten Anteile des Spannungseinbruchssignals zu unterdrücken. Auch das Spannungseinbruchssignal kann durch nicht dargestellte Verstärkerstufen verstärkt werden.

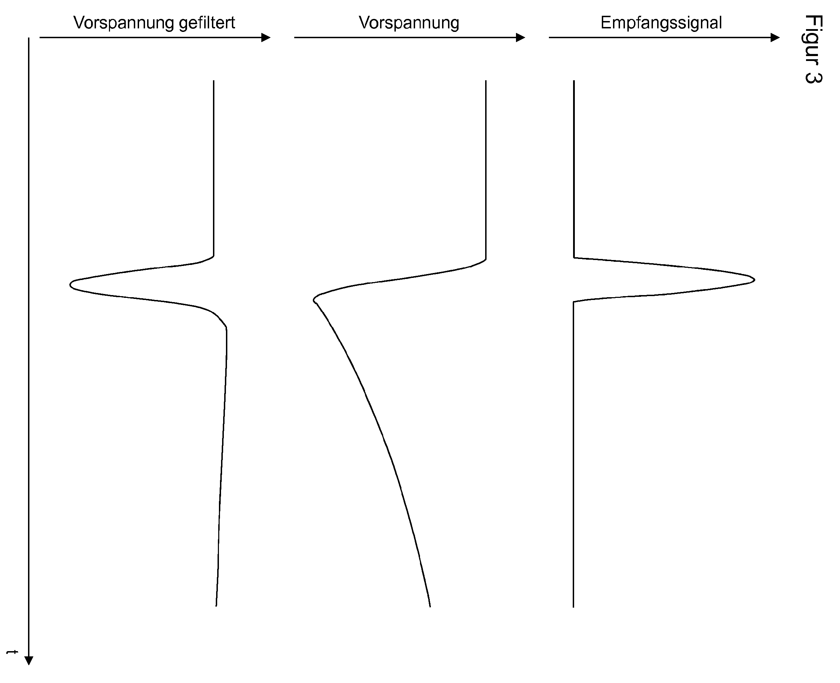

Figur 3 zeigt drei rein beispielhafte Signale der analogen Signalerfassung gemäß Figur 2, nämlich von oben nach unten den Photostrom des Lichtempfängers 26 als eigentliches Empfangssignal, das rohe Spannungseinbruchssignal an dem Ladekondensator 36 vor der Filterung in dem Hochpassfilter 38 und das von der Spannungsmesseinheit 32 erfasste Spannungseinbruchssignal nach der Filterung.

In dem Beispiel der Figur 3 wurden halbsinusförmige Pulse ausgesandt, so dass der Photostrom diese Form annimmt. Das rohe Spannungseinbruchssignal weicht von dieser Form deutlich ab. Während der Spannungsabfall noch mehr oder weniger synchron mit der steigenden Flanke des Photostroms einhergeht, wird der Ladekondensator 36, der die Vorspannung puffert, anschließend nur langsam und mit entsprechend flach ansteigender Flanke aufgeladen. Obwohl der Empfangszeitpunkt im Prinzip aus der Position der fallenden Flanke des rohen Spannungseinbruchssignals bestimmt werden könnte, wird vorzugsweise die Signalform durch den Hochpassfilter 38 angepasst. Wie im unteren Teil der Figur 3 zu erkennen, gelingt es bei für den Signalverlauf des Photostroms passender Grenzfrequenz des Hochpassfilters 38, in dem Spannungseinbruchssignal die ursprüngliche Pulsform aus dem rohen Spannungseinbruchssignal zu rekonstruieren.

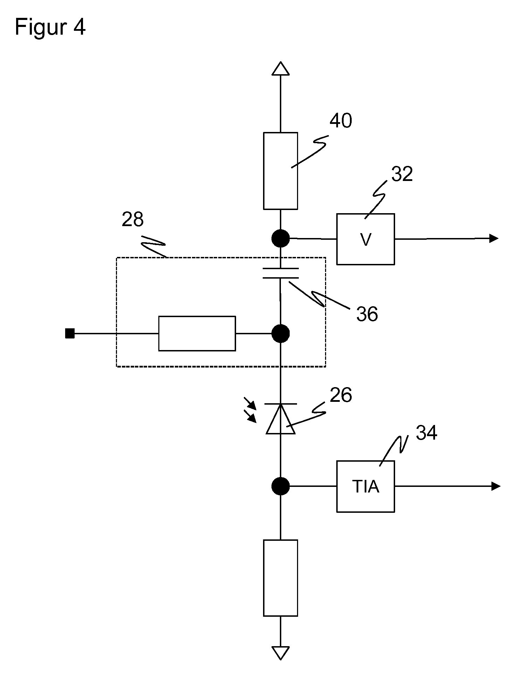

Figur 4 zeigt eine Schaltskizze einer weiteren Ausführungsform der analogen Signalerfassung des Sensors 10. Im Unterschied zu Figur 2 wird damit der Abgriff des Spannungseinbruchssignals ohne zusätzliche AC-Kopplung realisiert. Stattdessen wird ein zusätzlicher Widerstand 40 zwischen den Ladekondensator 36 und Masse geschaltet, wobei die Spannungsmesseinheit 32 das Spannungseinbruchssignal an diesem Widerstand 40 misst. Da hier die Spannung proportional zum Photostrom ist, entspricht die Signalform direkt derjenigen des Empfangssignals des Lichtempfängers 26. Die gewünschte Verstärkung des Spannungseinbruchssignals lässt sich in dieser Ausführungsform durch eine geeignete Wahl des Widerstands 40 einstellen. Die Verstärkung hängt nämlich von dem Verhältnis des Widerstands 40 zum Widerstand zwischen Anodenseite des Lichtempfängers 26 und Masse ab. Ein weiterer Vorteil dieser Ausführungsform besteht in der direkten Messung der Spannungsmesseinheit 30 gegen Masse.

## Patentansprüche

1. Entfernungsmessender Sensor (10), insbesondere optoelektronischer Sensor, zur Erfassung und Abstandsbestimmung von Objekten (20) in einem Überwachungsbereich (18), wobei der Sensor (10) einen Sender (12) zum Aussenden eines Sendesignals (16), einen Empfänger (26) zum Erzeugen eines Empfangssignals aus dem in dem Überwachungsbereich (18) remittierten Sendesignal (22) sowie eine Auswertungseinheit (30) aufweist, die dafür ausgebildet ist, eine Signallaufzeit von dem Sensor (10) zu dem Objekt (20) zu bestimmen, wobei der Empfänger (26) eine Vorspanneinheit (28) aufweist,
**dadurch gekennzeichnet,**
**dass** eine Spannungsmesseinheit (32) mit der Vorspanneinheit (28) verbunden ist, um ein Spannungseinbruchssignal bei Empfang eines remittierten Sendesignals (22) zu erzeugen, und dass die Auswertungseinheit (30) dafür ausgebildet ist, die Signallaufzeit anhand des Spannungseinbruchssignals zu bestimmen.

2. Sensor (10) nach Anspruch 1,
wobei die Auswertungseinheit (30) dafür ausgebildet ist, die Lichtlaufzeit mehrkanalig anhand des Empfangssignals und des Spannungseinbruchssignals zu bestimmen.

3. Sensor (10) nach Anspruch 1 oder 2,
wobei zwischen Empfänger (26) und Auswertungseinheit (30) ein erster Verstärker (34) vorgesehen ist, um aus dem Empfangssignal ein verstärktes Spannungssignal zu erzeugen.

4. Sensor (10) nach einem der vorhergehenden Ansprüche,
wobei die Spannungsmesseinheit (32) einen zweiten Verstärker aufweist.

5. Sensor (10) nach Anspruch 3 und 4,
wobei erster Verstärker (34) und zweiter Verstärker aufeinander abgestimmte Verstärkungsfaktoren aufweisen, damit Empfangssignal und Spannungseinbruchssignal in unterschiedlichen Empfindlichkeitsbereichen erfasst werden.

6. Sensor (10) nach einem der vorhergehenden Ansprüche,
wobei der Empfänger (26) eine Avalanche-Photodiode ist und die Vorspanneinheit (28) eine Hochspannung erzeugt.

7. Sensor (10) nach einem der vorhergehenden Ansprüche,
wobei die Vorspanneinheit (28) einen Ladekondensator (36) aufweist.

8. Sensor (10) nach Anspruch 7,
wobei die Vorspanneinheit (28) einen Widerstand (40) zwischen Ladekondensator (36) und Masse aufweist, und wobei die Spannungsmesseinheit (32) das Spannungseinbruchssignal an dem Widerstand (40) erfasst.

9. Sensor (10) nach einem der vorhergehenden Ansprüche,
wobei die Vorspanneinheit (28) einen Hochpassfilter (38) aufweist.

10. Verfahren zur Erfassung und Abstandsbestimmung von Objekten (20) in einem Überwachungsbereich (18), bei dem ein Sendesignal (16) ausgesandt, das aus dem Überwachungsbereich (18) remittierte Sendesignal (22) wieder empfangen und die Signallaufzeit zu dem Objekt (20) bestimmt wird, wobei das remittierte Sendesignal (22) von einem mit Hilfe einer Vorspanneinheit (28) vorgespannten Empfänger (26) erfasst wird,
**dadurch gekennzeichnet,**
**dass** an der Vorspanneinheit (28) bei Empfang eines remittierten Sendesignals (22) ein Spannungseinbruchssignal erzeugt wird, und dass die Signallaufzeit anhand des Spannungseinbruchssignals bestimmt wird.

## Claims

1. A distance-measuring sensor (10), in particular an optoelectronic sensor, for detecting objects (20) in a monitoring area (18) and determining their distance, wherein the sensor (10) comprises a transmitter (12) for transmitting a transmission signal (16), a receiver (26) for generating a reception signal from the remitted transmission signal (22) remitted in the monitoring area (18) as well as an evaluation unit (30) which is configured to determine a signal time of flight from the sensor (10) to the object (20), wherein the receiver (26) comprises a bias voltage unit (28),
**characterized in that** a voltage measuring unit (32) is connected to the bias voltage unit (28) in order to generate a voltage drop signal when receiving a remitted transmission signal (22), and **in that** the evaluation unit (30) is configured to determine the signal time of flight based on the voltage drop signal.

2. The sensor (10) according to claim 1,
wherein the evaluation unit (30) is configured to determine the light time of flight in multiple channels based on the reception signal and the voltage drop signal.

3. The sensor (10) according to claim 1 or 2,
wherein a first amplifier (34) is provided between receiver (26) and evaluation unit (30) in order to generate an amplified voltage signal from the reception signal.

4. The sensor (10) according to any of the preceding claims,
wherein the voltage measuring unit (32) comprises a second amplifier.

5. The sensor (10) according to claim 3 and 4,
wherein first amplifier (34) and second amplifier have coordinated gain factors so that reception signal and voltage drop signal are detected in different sensitivity ranges.

6. The sensor (10) according to any of the preceding claims,
wherein the receiver (26) is an avalanche photo diode and the bias voltage unit (28) generates a high voltage.

7. The sensor (10) according to any of the preceding claims,
wherein the bias voltage unit (28) comprises a reservoir capacitor (36).

8. The sensor (10) according to claim 7,
wherein the bias voltage unit (28) comprises a resistor (40) between reservoir capacitor (36) and ground, and wherein the voltage measuring unit (32) detects the voltage drop signal at the resistor (40).

9. The sensor (10) according to any of the preceding claims,
wherein the bias voltage unit (28) comprises a high pass filter (38).

10. A method for detecting objects (20) in a monitoring area (18) and for determining their distance, wherein a transmission signal (16) is transmitted, the remitted transmission signal (22) remitted from the monitoring area (18) is detected and the signal time of flight to the object (20) is determined, wherein the remitted transmission signal (22) is detected by a receiver (26) biased with a bias voltage unit (28),
**characterized in that** a voltage drop signal is generated at the bias voltage unit (28) when a remitted transmission signal (22) is detected, and **in that** the signal time of flight is determined based on the voltage drop signal.

## Revendications

1. Capteur destiné à la mesure d'éloignement (10), en particulier capteur optoélectronique, pour la détection et la détermination de distances d'objets (20) dans une zone de surveillance (18), ledit capteur (10) comprenant un émetteur (12) pour émettre un signal émis (16), un récepteur (26) pour engendrer un signal de réception à partir du signal émis (22) réémis dans la zone de surveillance (18), ainsi qu'une unité d'évaluation (30) qui est réalisée pour déterminer un temps de parcours du signal depuis le capteur (10) jusqu'à l'objet (20), dans lequel le récepteur (26) comprend une unité de mise sous tension (28), **caractérisé en ce que**
une unité de mesure de tension (32) est connectée avec l'unité de mise sous tension (28), afin d'engendrer un signal de chute de tension lors de la réception d'un signal émis réémis (22), et **en ce que** l'unité d'évaluation (30) est réalisée pour déterminer le temps de parcours du signal au moyen du signal de chute de tension.

2. Capteur (10) selon la revendication 1,
dans lequel l'unité d'évaluation (30) est réalisée pour déterminer le temps de parcours de la lumière sur plusieurs canaux au moyen du signal de réception et du signal de chute de tension.

3. Capteur (10) selon la revendication 1 ou 2,
dans lequel il est prévu un premier amplificateur (34) entre le récepteur (26) et l'unité d'évaluation (30), afin d'engendrer un signal de tension amplifié à partir du signal de réception.

4. Capteur (10) selon l'une des revendications précédentes,
dans lequel l'unité de mesure de tension (32) comprend un second amplificateur.

5. Capteur (10) selon la revendication 3 et 4,
dans lequel le premier amplificateur (34) et le second amplificateur présentent des facteurs d'amplification accordés l'un à l'autre, afin que le signal de réception et le signal de chute de tension soient détectés dans des plages de sensibilité différentes.

6. Capteur (10) selon l'une des revendications précédentes,
dans lequel le récepteur (26) est une photodiode à avalanche et l'unité de mise sous tension (28) engendre une haute tension.

7. Capteur (10) selon l'une des revendications précédentes,
dans lequel l'unité de mise sous tension (28) comprend un condensateur de charge (36).

8. Capteur (10) selon la revendication 7,
dans lequel l'unité de mise sous tension (28) comprend une résistance (40) entre le condensateur de charge (36) et la masse, et dans lequel l'unité de mesure de tension (32) détecte le signal de chute de tension au niveau de la résistance (40).

9. Capteur (10) selon l'une des revendications précédentes,
dans lequel l'unité de mise sous tension (28) comprend un filtre passe-haut (38).

10. Procédé pour la détection et la détermination de distances d'objets (20) dans une zone de surveillance (18), dans lequel on émet un signal émis (16), on reçoit un nouveau le signal émis réémis (22) hors de la zone de surveillance (18), et on détermine le temps de parcours du signal jusqu'à l'objet (20), dans lequel le signal émis réémis (22) est détecté par un récepteur (26) mis sous tension avec l'aide d'une unité de mise sous tension (28),
**caractérisé en ce qu'**on engendre au niveau de l'unité de mise sous tension (28), lors de la réception du signal émis réémis (22), un signal de chute de tension, et **en ce que** le temps de parcours du signal est déterminé au moyen du signal de chute de tension.
